Europäisches Patentamt

European Patent Office

Office européen des brevets

(11) Veröffentlichungsnummer: **0 058 423**
**A2**

(12) **EUROPÄISCHE PATENTANMELDUNG**

(21) Anmeldenummer: **82101103.8**

(22) Anmeldetag: **14.02.82**

(51) Int. Cl.³: **B 23 D 29/00**
**//B23D31/00**

(30) Priorität: **18.02.81 DE 3105843**
**27.02.81 DE 3107378**

(43) Veröffentlichungstag der Anmeldung:
**25.08.82 Patentblatt 82/34**

(84) Benannte Vertragsstaaten:
**AT CH DE FR GB IT LI NL**

(71) Anmelder: **dipa Matthias & René Dick GmbH**
**Viehtrift 4**
**D-5000 Köln 90(DE)**

(72) Erfinder: **Dick, Matthias**
**Viehtrift 4**
**D-5000 Köln 90(DE)**

**Der weitere Erfinder hat auf seine Nennung verzichtet**

(74) Vertreter: **Freischem, Werner, Dipl.-Ing. et al,**
**Patentanwälte Dipl.-Ing. W. Freischem Dipl.-Ing. I.**
**Freischem An Gross St. Martin 2**
**D-5000 Köln 1(DE)**

(54) Handgerät zum Ablängen von Metallbandstücken, insbesondere zur Herstellung von Rohrschellen oder Rohrbefestigungen.

(57) Die Erfindung geht aus von einem Handgerät mit einem Trennmesser (6), das starr an einem Druckarm (5) befestigt ist, dessen eines Ende verschwenkbar mit einer Grundplatte (1) verbunden ist und dessen anderes, ausschwenkbares Ende über eine Lasche (9) mit einem an der Grundplatte (1) schwenkbar gelagerten Handhebel (8) verbunden ist und das mit einer gegen die Grundplatte (1) abgestützten Gegenschneide (15) zusammenwirkt. Damit beispielsweise an einer Baustelle mit Hilfe eines derartigen Handgerätes in einem Arbeitsgang maßgenaue Bandstücke abgelängt und mit Befestigungslöchern versehen werden können, weist das Trennmesser (6) an beiden Seiten Schneidkanten auf, die mit zwei gegen die Grundplatte (1) sich abstützdenden Gegenschneiden (15) zusammenwirken. Ferner sind zu beiden Seiten des Trennmessers (6) im gleichen Abstand von dessen Schneidkanten Lochstempel (10) angeordnet, die um eine zur Schwenkachse (4) des Druckarmes (5) parallele Schwenkachse (11) schwenkbar am Druckarm (5) befestigt und in Führungsblöcken (12) senkrecht zu einer Führungsbahn für das Bandmaterial (17) verschiebbar geführt sind und die mit Schneidlöcher aufweisenden, gegen die Grundplatte (1) sich abstützdenden Matrizen (13) zusammenwirken.

FIG.1

- 1 -

Anmelderin: dipa
           Matthias + René Dick GmbH
           Viehtrifft 4
           5000 Köln 90

Bezeichnung: Handgerät zum Ablängen von Metallbandstücken,
             insbesondere zum Herstellen von Rohrschellen
             oder Rohrbefestigungen

Die Erfindung bezieht sich auf ein Handgerät zum Ablängen von Metallbandstücken, insbesondere zum Herstellen von Rohrschellen und Laschen oder Winkelstücken für Rohrbefestigungen mit einem Trennmesser, das starr an einem Druckarm befestigt ist, dessen eines Ende verschwenkbar mit einer Grundplatte verbunden ist und dessen anderes, ausschwenkbares Ende über eine Lasche mit einem an der Grundplatte schwenkbar gelagerten Handhebel verbunden ist und das mit einer gegen die Grundplatte abgestützten Gegenschneide zusammenwirkt.

Zum Ablängen von beispielsweise 20 mm breiten und 2 mm dicken Stahlbandmaterial sind von Hand zu betätigende Trennscheren bekannt, mit denen an der Baustelle Stahlbandstücke zugeschnitten werden können. Falls aus diesen Stahlbandstücken Rohrschellen oder Aufhängelaschen angefertigt werden sollen, werden mit einem Körner die Punkte auf den Stahlbandstücken markiert, an denen ein Loch zur Durchführung einer Befestigungsschraube eingearbeitet werden soll. Die Löcher werden dann mittels einer elektrischen Bohrmaschine in das Stahlbandstück eingearbeitet. Weil diese Arbeiten an einer Baustelle nur mit großem Zeitaufwand durchgeführt werden können, werden dort meist fabrikmäßig vorgefertigte Aufhängelaschen, Rohrschellen und dergleichen verwendet. Da aber die Maße und die Zahl der benötigten Aufhängelaschen und Rohrschellen häufig nicht bekannt sind, ist es notwendig, daß der Monteur an der Baustelle die benötigten Teile anfertigt.

Zur Herstellung dieser Stahlbandteile stehen dem Monteur einer Sanitär-, Heizungs- oder Lüftungsfirma an der Baustelle meist eine Werkbank, ein Schraubstock, Sägen, Handhebelscheren, Bohrmaschinen und manchmal auch Handhebellochstanzen zur Verfügung. Trotz dieser Ausrüstung ist der Zeitaufwand für die Herstellung der benötigten Stahlbandteile erheblich.

Der Erfindung liegt die Aufgabe zugrunde, ein Handgerät zu schaffen, mit dessen Hilfe der Monteur an der Baustelle schnell und mit geringem Aufwand eine solide Rohrbefestigung herstellen kann.

Diese Aufgabe wird erfindungsgemäß dadurch gelöst, daß das Trennmesser an beiden Seiten Schneidkanten aufweist, die mit zwei gegen die Grundplatte sich abstützende Gegenschneiden zusammenwirken und zu beiden Seiten des Trennmessers im gleichen Abstand von dessen Schneidkanten Lochstempel angeordnet sind, die um eine zur Schwenkachse des Druckarmes parallele Schwenkachse schwenkbar am Druckarm befestigt und in Führungsblöcken senkrecht zu einer Führungsbahn für das Bandmaterial verschiebbar geführt sind und die mit Schneidlöcher *aufweisende,* gegen die Grundplatte sich abstützende Matrizen zusammenwirken. Beim Ablängen eines Bandstückes mit Hilfe des erfindungsgemäßen Handgerätes werden gleichzeitig in das Ende des abge ängten Bandstücks und in den Anfang des folgenden Bandstücks je ein Loch eingestanzt, das einen konstanten Abstand von den Trennschnitten des Bandes hat.

Zur Vereinfachung der Handhabung ist das Handgerät mit einer Führungsbahn für das Bandmaterial versehen, die derart in Bezug auf die Lochstempel angeordnet ist, daß diese stets in der Längsmitte des zu bearbeitenden Metallbandes auftreffen.

Zweckmäßigerweise ist zwischen den Matrizen und den Führungsblöcken ein Führungsspalt angeordnet, der die größte Dicke und die größte Breite des zu bearbeitenden Bandmaterials begrenzt.

Hinter dem Führungsspalt ist ein einstellbarer Anschlag angeordnet, der dazu dient, die abzutrennende Länge des Bandstücks einzustellen.

Vorteilhafter ist in der Flucht einer Seitenwand der Führungsbahn eine Anschlagführung angeordnet, auf welche der Anschlag verschiebbar und feststellbar geführt ist. Diese Anschlagführung trägt eine Längenmaßskala und dient auch gleichzeitig zur Verlängerung der Führungsbahn.

Um mit geringem Aufwand auch die Befestigungsflansche von Rohrschellen abwinkeln zu können, ist zwischen dem Trennmesser und dem ausschwenkbaren Ende des Druckarms am Druckarm ein Biegestempel befestigt, der mit einer gegen die Grundplatte sich abstützenden Biegematrize derart zusammenwirkt, daß ein in die Biegematrize eingelegtes Stahlbandstück um 90 bis 100° abgewinkelt wird.

Weitere Merkmale der Erfindung ergeben sich aus den Patentansprüchen.

Eine Ausführungsform der erfindungsgemäßen Vorrichtung ist in den Zeichnungen dargestellt. Diese zeigen in

Fig. 1 eine schaubildliche Ansicht der erfindungsgemäßen Vorrichtung

Fig. 2 eine Seitenansicht der Vorrichtung gemäß Fig. 1 in Öffnungsstellung

Fig. 3 eine Seitenansicht der Vorrichtung gemäß Fig. 1 in Schließstellung

Fig. 4 eine Ansicht nach der Schnittlinie IV-IV in Fig. 2

Fig. 4a-4c Bearbeitungsstufen  des Stahlbandes

Fig. 5 eine Ansicht nach der Schnittlinie V-V in Fig. 2

Fig. 5a-5e Bearbeitungsstufen des abgelängten Stahlbandstückes

Fig. 6 Seitenansicht und

Fig. 7 Frontansicht des Handgerätes mit Ständer

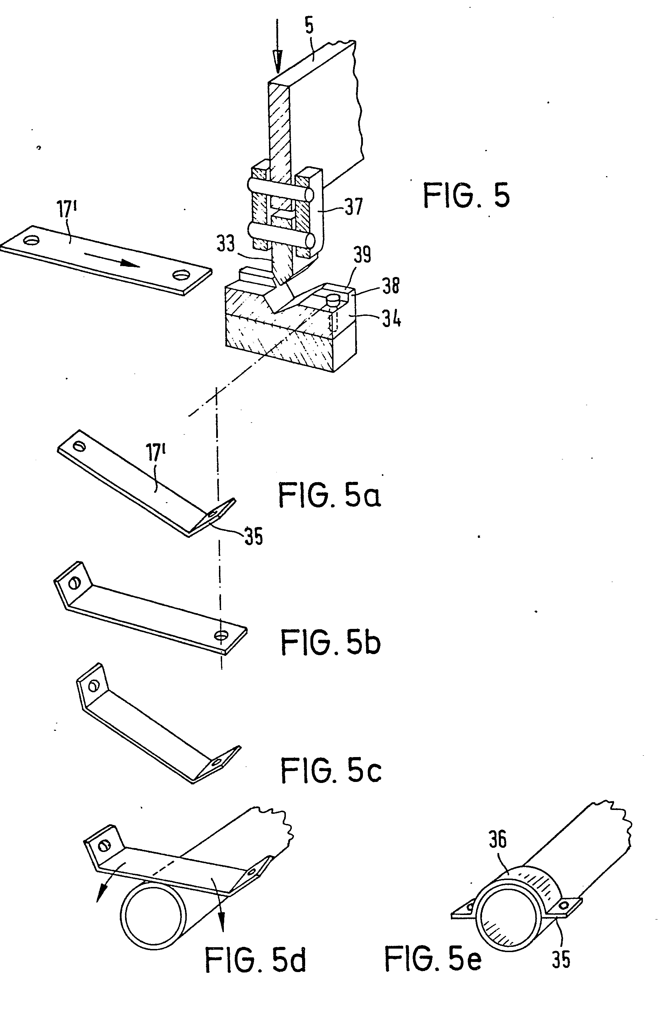

Das dargestellte Handgerät ist zum Ablängen, Lochen und Biegen von Stahlbandstücken bestimmt, die zum Herstellen von Rohrschellen gemäß Fig. 5e dienen. Diese Vorrichtung dient aber auch zum Herstellen von Laschen und Winkelstücken, die bei der Aufhängung oder Befestigung von Rohrleitungen, Lüftungskanälen oder dergleichen benötigt werden.

Die Ablängvorrichtung weist eine mit Befestigungslöchern versehene Grundplatte 1 auf, auf welcher zwei Lagerbockpaare 2 und 3 befestigt sind. Im Lagerbockpaar 2 ist um eine horizontale Achse 4 schwenkbar ein Druckarm 5 gelagert, an dem ein Trennmesser 6 starr befestigt ist. Im Lagerbockpaar 3 ist um eine Achse 7 schwenkbar ein Handhebel 8 gelagert, an dessen freiem, nicht dargestellten Ende ein Handgriff beispielsweise aus Gummi angeordnet ist. Über Laschen 9, die in einem relativ geringen Abstand von der Achse 7 am Handhebel 8 und am ausschwenkbaren Ende des Druckarms 5 angelenkt sind, ist der Handhebel 8 mit dem Druckarm 5 unter Bildung einer Übersetzung verbunden.

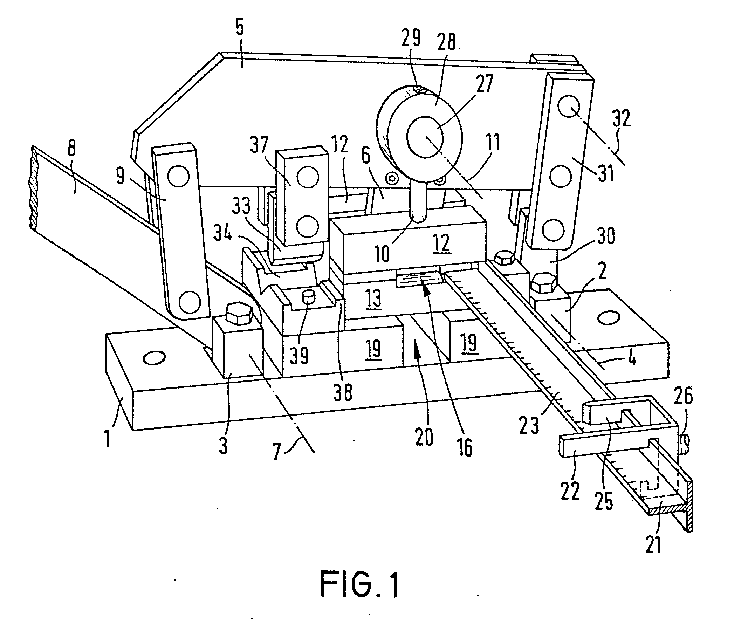

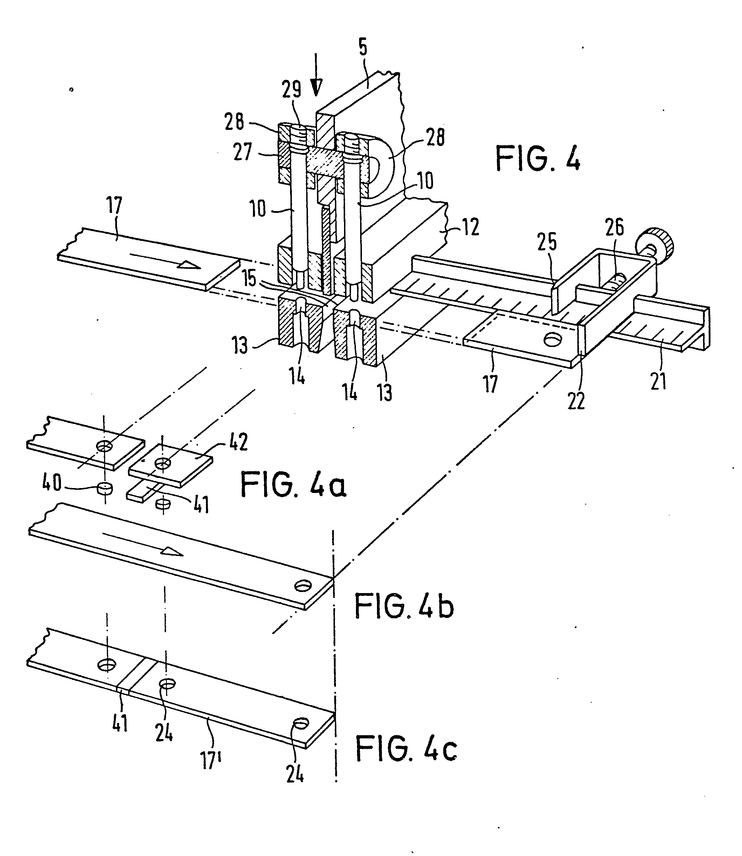

Zu beiden Seiten des Trennmessers 6 sind Lochstempel 10 angeordnet, die um eine zur Schwenkachse 4 des Druckarmes 5 parallele Achse 11 schwenkbar am Druckarm 5 befestigt sind. Die Lochstempel 10 sind in Führungsblöcken 12 geführt, die sich auf Matrizen 13 abstützen, in denen die Schneidlöcher 14 eingearbeitet sind, die mit den Schneidkanten der Lochstempel 10 zusammenwirken. Wie Fig. 4 zeigt, sind an den oberen, innenliegenden Kanten der beiden Matrizen 13, die mit den Schneidkanten des Trennmessers 6 zusammenwirkenden Gegenschneiden 15 angeordnet. Das Trennmesser 6 ist zwischen den beiden Führungsblöcken 12 geführt. Zwischen den Führungsblöcken 12 und den Matrizen 13 ist ein Führungsspalt 16 für das zu bearbeitende Stahlbandmaterial 17 angeordnet, dessen Ausgang in Fig. 1 zu sehen ist. Der etwa 2 cm breite Führungsspalt 16 wird durch Distanzstücke 18 gebildet, die zwischen den Matrizen 13 und den Führungsblöcken 12 angeordnet ist. Die Matrizen 13 sind derart auf Stützblöcke 19 abgestützt, daß unterhalb des Führungsspaltes 16 ein Durchgang 20 zum Aufnehmen und Abführen des Stanzabfalles 40, 41 frei bleibt.

Mit einer Seite des Führungsspaltes 16 fluchtens ist in Höhe des Führungsspaltes 16 eine Anschlagführung 21 angeordnet, auf der ein verschiebbarer und feststellbarer Anschlag 22 für das abzulängende Stahlbandmaterial 17 geführt und gehalten ist. Auf der Anschlagführung 21 befindet sich eine Längenmaßskala 23, mit deren Hilfe die Länge des abzulängenden Stahlbandstücks 17' und bzw. oder der Abstand der in das Stahlbandstück 17' eingestanzten Löcher 24 eingestellt werden kann. Dabei dient die Anschlagfläche des Anschlages 22 als Zeiger, der auf der Längenmaßskala 23 die eingestellte Länge anzeigt. Damit mit Hilfe des verschiebbaren Anschlags 22 auch der Lochabstand eingestellt werden kann, ist mit dem Anschlag 22 ein Zeiger 25 verbunden, der gegenüber dem Anschlag 22 um einen Betrag nach innen versetzt ist, der dem Abstand der Lochmitten der beiden eingestanzten Löcher 24 von den Enden der Stellbandstücke 17' entspricht. Wie insbesondere Fig. 4 zeigt, ist der Anschlag 22 mittels einer mit einem Handrad versehenen Klemmschraube 26 auf der von einem T-Profil gebildeten Anschlagführung 21 feststellbar. Die untere Kante des Anschlages 22 befindet sich nur wenig unterhalb der oberen Fläche des Führungsspaltes 16, damit das vom Stahlbandmaterial 17 abgeschnittene und mit Löchern 24 versehene Stück 17' nicht zwischen dem Trennmesser 6 und dem Anschlag 22 eingeklemmt wird. Ferner ist zur leichteren Entnahme des Bandstücks 17' am Ausgang des Führungsspaltes 16 eine Abschrägung vorgesehen, die es ermöglicht, das Bandstück 17' bei der Entnahme nach unten zu drücken.

Zum leichteren Einführen des Stahlbandmaterials 17 in den Führungsspalt 16 kann dieser an seinem Eingang trichterartig erweitert sein.

Die beiden Lochstempel 10 stützen sich gegen eine Druckwelle 27 ab, die drehbar in den Druckarm 5 eingesetzt ist. Damit sich die Druckwelle 27 bei einseitiger Belastung nicht verkantet, sind auf die beiden seitlich aus dem Druckarm 5 herausragende Wellenstummel großflächige Ringe 28 aufgesetzt, die an den Seitenwänden des Druckarmes 5 anliegen. In der Druckwelle 27 sind zwei Bohrungen angebracht, durch welche die beiden Lochstempel 10 gesteckt werden. Die Lochstempel 10 haben an ihrem oberen Ende einen seitlich vorstehenden Bund, der als Anschlag dient. Die beiden Ringe 28 weisen radial verlaufende Bohrungen auf, durch welche die Lochstempel 10 eingesetzt werden können. Die oberen radialen Bohrungen der Ringe 28 sind mittels Schraubenbolzen 29 verschließbar. Die Schraubenbolzen 29 drücken die Lochstempel 10 mit ihrem Bund gegen die Druckwelle 27. Auf diese Weise sind die Lochstempel 10 starr mit der Druckwelle 27 verbunden.

Weil die Lochstempel 10 vertikal verschieblich geführt sind, muß dafür gesorgt werden, daß während des Stanzhubes keine größeren seitlich auf die Lochstempel 10 wirkenden Kräfte auftreten. Das kann dadurch erreicht werden, daß die Druckwelle 27 horizontal verschiebbar im Druckarm 5 gelagert ist oder aber daß der Druckarm 5 gegenüber seiner Schwenkachse 4 horizontal verschiebbar ist. Letzteres wird beim Ausführungsbeispiel dadurch erreicht, daß der Druckarm 5 über zwei aneinandergelenkte Laschen 30, 31, von denen die Lasche 30 um die Schwenkachse 4 schwenkbar mit der Grundplatte 1 und die Lasche 31 um die Schwenkachse 32 schwenkbar mit dem Druckarm 5 verbunden ist, mit der Grundplatte 1 gekuppelt ist.

Am Druckarm 5 ist zwischen dem Trennmesser 6 und dem ausschwenkbaren Ende des Druckarmes ein Biegestempel 33 befestigt, der mit einer auf der Grundplatte 1 befestigten Biegematrize 34 zusammenarbeitet. Dieses Biegewerkzeug 33, 34 dient in erster Linie dazu, die je mit einem Loch 34 versehenen Endbereiche eines abgelängten Stahlbandstücks 7 um einen Winkel von $90^o - 100^o$ abzubiegen, so daß Befestigungsflansche 35 einer Rohrschelle 36 entstehen.

Der Biegestempel 33 ist über ein Laschenpaar 37 so am Druckarm 5 angelenkt, daß sich seine Biegeschneide stets parallel zur Oberfläche der Biegematrize einstellen kann.

Die Biegematrize 34 ist mit Führungsstegen 38 und mit einem Anschlag 39 versehen, um ein richtiges Einlegen der zu bearbeitenden Stahlbandstücke 17' zu erleichtern. Der Anschlag 39 ist ausschraubbar, so daß er ohne Schwierigkeiten entfernt werden kann, falls beispielsweise Winkelstücke hergestellt werden sollen.

Das Handgerät nach der Erfindung ist zur Verarbeitung eines Stahlbandes bestimmter Breite und Dicke bestimmt. Selbstverständlich können auch Bänder gleicher Breite und Dicke aus Aluminium oder anderen Metallen verarbeitet werden. Ein im Rohrleitungsbau häufig benutzte Bandgröße ist 20mm breit und 2mm dick. Insbesondere für ein derartiges Band ist das dargestellte Gerät ausgelegt.

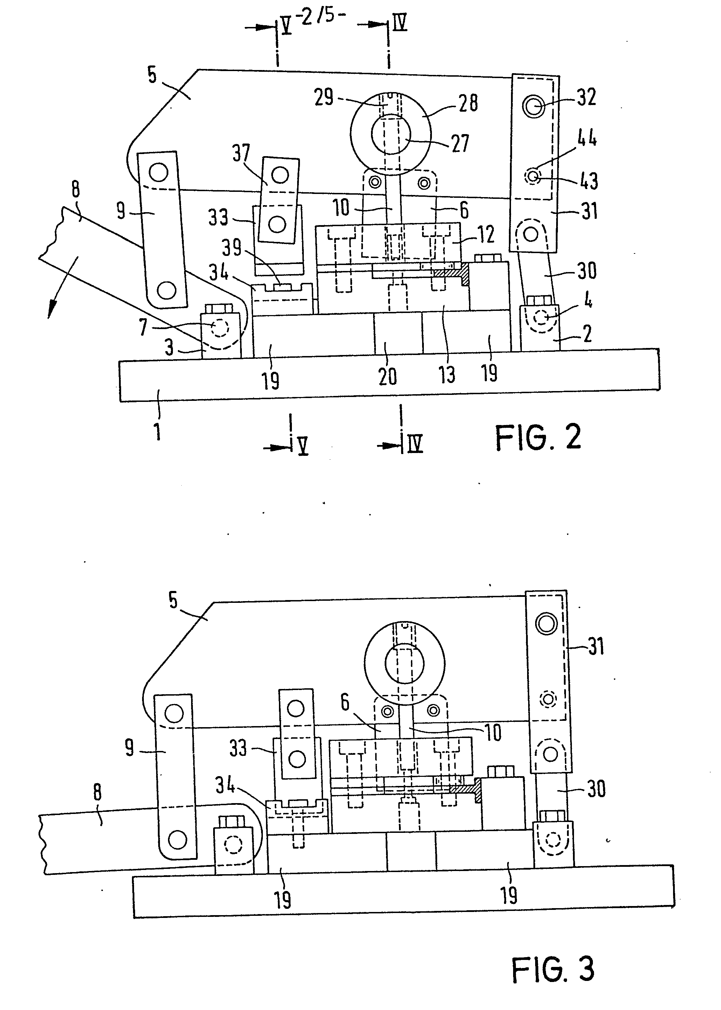

Damit beim Hochschwenken des Handhebels 8 auch das Trennmesser sowie der Lochstempel wieder in die Ausgangslage hoch gehoben werden können, muß der Schwenkwinkel der am Druckarm 5 angelenkten Lasche 31 auf einen relativ kleinen Winkel, beispielsweise 5°, begrenzt werden, da andernfalls beim Hochdrücken des ausschwenkbaren Endes die beiden am anderen Ende des Druckarmes angelenkten Laschen einknicken, so daß das Trennmesser 6 die Lochstempel 10 und die Biegestempel 33 nicht in ihre Ausgangslage hochgehoben würden. Wie sich insbesondere aus Fig. 2 ergibt, werden die Anschläge 44 durch eine Bohrung im Druckarm 5 gebildet, durch welche ein beidendig in den Laschen 31 eingesetzter Stift 43 hindurchgeführt ist. Auf diese Weise ist der Schwenkwinkel des Druckarmes 5 gegenüber der Lasche 31 auf einen Schwenkwinkel von etwa 3° eingegrenzt.

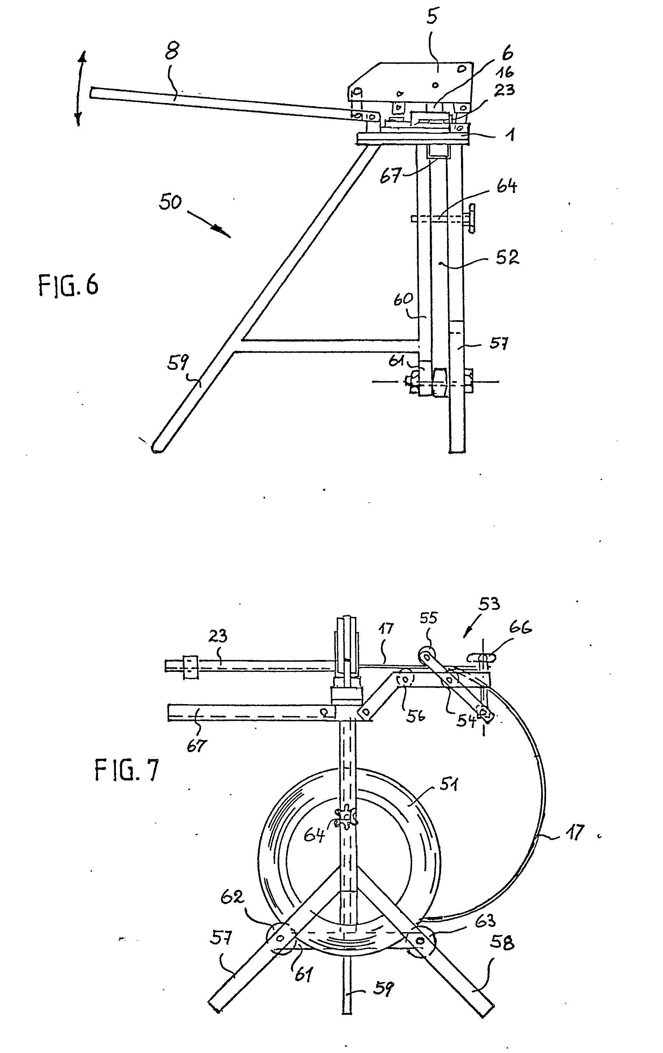

Die Figuren 6 und 7 zeigen das Handgerät mit einem dreibeinigen Ständer 50 , der in der Flucht der Bandführung, rechtwinklig zum Trennmesser 6 eine die zuverarbeitende Stahlbandrolle 51 aufnehmende Tasche 52 aufweist. Vor dem Führungsspalt 16 des Handgerätes ist eine Richtvorrichtung 53 angeordnet mit welcher das von der Stahlbandrolle 51 abgezogene Stahlbandmaterial 17 aufgebogen und geradegerichtet wird. Die Richtvorrichtung 53 weist mindestens drei Rollen 54, 55, 56 auf, von denen mindestens eine Rolle insbesondere die mittlere Rolle 55 höheneinstellbar ist. Das Einstellen der Rolle 55 geschieht mit Hilfe einer Einstellschraube 56 , die am freien Ende eines Verstellhebels 65 angelenkt ist, an derem anderen Ende die Rolle 55 gelagert ist. Zweckmäßigerweise ist der Verstellhebel 65 um die Achse einer Rolle 54 verschwenkbar gelagert.

Die Tasche 52 wird von zwei in einer senkrechten Ebene befindlichen Beinen 57, 58 des Ständers 50. und von im Abstand parallel zu diesen Beinen 57, 58 verlaufenden Profilen 60, 61 sowie von zwischen den Beinen 57, 58 und dem ho rizontalen Profil 61 drehbargelagerten Rollen 62, 63 gebildet. Diese Rollen 62, 63 können ebenso wie die Rollen 54, 55, 56 der Richtvorrichtung 53 von Kugellagern oder Rolllagern gebildet werden.

Die Bandstahlrolle kann ohne Schwierigkeiten in die Tasche 52 eingesetzt werden und wird in dieser Tasche vom eigenen Gewicht gehalten. Dieses Gewicht beträgt bei noch voller Bandstahlrolle etwa 20 kg. Als Haltesicherung dient ein Schraubenbolzen 64 mit Sterngriff, der nach Einsetzen der Bandstahlrolle 51 eingeschraubt wird.

Unterhalb des Führungsspaltes 16 und parallel zur Längenmeßskala 23 ist am Ständer 50 eine Auffangrinne 67 für das verarbeitete Material angeordnet.

Das Handgerät bildet zusammen mit dem Ständer eine Fertigungseinheit, mit welcher es möglich ist, unmittelbar, von der preiswerten Bandstahlrolle abfallfrei Rohrschellen und sonstige Befestigungselemente für den Heizungs,- Lüftungs,- und Sanitärbereich am Montageort herzustellen.

Das zu verarbeitende Stahlbandmaterial 17 kann von Hand von der Bandstahlrolle 51 abgezogen und durch die Richtvorrichtung 53 in den Führungsspalt 16 geschoben werden. Es ist aber auch möglich, an der Richtvorrichtung 53 ein Abzugsrollenpaar anzuordnen, so daß durch drehen eine der beiden Abzugsrollen, beispielsweise mittels einer Handkurbel ein beliebig großes Stahlbandstück von der Bandstahlrolle 51 abzuziehen und durch die Richtvorrichtung 53 in den Führungsspalt 16 vorzuschieben.

- 11 -

0058423

## 1  <u>B E Z U G Z E I C H E N L I S T E</u>

| | |
|---|---|
| 1 | Grundplatte |
| 2 | Lagerbockpaar |
| 3 | Lagerbockpaar |
| 4 | Schwenkachse |
| 5 | Druckarm |
| 6 | Trennmesser |
| 7 | Schwenkachse |
| 8 | Handhebel |
| 9 | Lasche |
| 10 | Lochstempel |
| 11 | Schwenkachse |
| 12 | Führungsblöcke |
| 13 | Matrize |
| 14 | Schneidlöcher |
| 15 | Gegenschneiden |
| 16 | Führungsspalt |
| 17 | Stahlbandmaterial |
| 17' | abgeschnittene Stahlbandstücke |
| 18 | Distanzstücke |
| 19 | Stützblöcke |
| 20 | Durchgang |
| 21 | Anschlagführung |
| 22 | Anschlag |
| 23 | Längenmeßskala |
| 24 | Löcher |
| 25 | Zeiger |
| 26 | Klemmschraube |
| 27 | Druckwelle |
| 28 | Stellring |
| 29 | Schraubenbolzen |
| 30 | Lasche |
| 31 | Lasche |

- 12 -

0058423

| 32 | Schwenkachse |
| 33 | Biegestempel |
| 34 | Biegematrize |
| 35 | Befestigungsflansch |
| 36 | Rohrschelle |
| 37 | Laschenpaar |
| 38 | Führungssteg |
| 39 | Anschlag |
| 40 | Stanzabfall |
| 41 | Stanzabfall |
| 42 | verlorenes Stück |
| 43 | Anschlagstift |
| 44 | Anschlagbohrung |
| 50 | Ständer |
| 51 | Bandstahlrolle |
| 52 | Tasche |
| 53 | Richtvorrichtung |
| 54 | Rolle |
| 55 | verstellbare Rolle |
| 56 | Rolle |
| 57 | Bein |
| 58 | Bein |
| 59 | Bein |
| 60 | senkrechtes Profil |
| 61 | waagerechtes Profil |
| 62 | Rolle |
| 63 | Rolle |
| 64 | Schraubenbolzen mit Griff |
| 65 | Verstellhebel |
| 66 | Einstellschraube |
| 67 | Auffangrinne |

PATENTANSPRÜCHE:

1. Handgerät zum Ablängen von Metallbandstücken, insbesondere zum Herstellen von Rohrschellen und Laschen oder Winkelstücken für Rohrbefestigungen mit einem Trennmesser, das starr an einem Druckarm befestigt ist, dessen eines Ende verschwenkbar mit einer Grundplatte verbunden ist und dessen anderes, ausschwenkbares Ende über eine Lasche mit einem an der Grundplatte schwenkbar gelagerten Handhebel verbunden ist und das mit einer gegen die Grundplatte abgestützten Gegenschneide zusammenwirkt,

dadurch gekennzeichnet,

daß das Trennmesser (6) an beiden Seiten Schneidkanten aufweist, die mit zwei gegen die Grundplatte (1) sich abstützende Gegenschneiden (15) zusammenwirken und zu beiden Seiten des Trennmessers (6) im gleichen Abstand von dessen Schneidkanten Lochstempel (10) angeordnet sind, die um eine zur Schwenkachse (4) des Druckarmes (5) parallele Schwenkachse (11) schwenkbar am Druckarm (5) befestigt und in Führungsblöcken (12) senkrecht zu einer Führungsbahn für das Bandmaterial (17) verschiebbar geführt sind und die mit Schneidlöcher aufweisende, gegen die Grundplatte (1) sich abstützende Matrizen (13) zusammenwirken.

2. Handgerät nach Anspruch 1,
dadurch gekennzeichnet,
daß die mit je einem Schneidloch (14) versehenen Matrizen (13) auch je eine mit dem Trennmesser (6) zusammenwirkende Gegenschneide (15) aufweisen.

3. Handgerät nach Anspruch 1 oder 2,

0058423

-2-

dadurch gekennzeichnet, daß der Druckarm (5) im wesentlichen horizontal verschiebbar mit der Grundplatte (1) verbunden ist.

4. Handgerät nach Anspruch 3, dadurch gekennzeichnet, daß der Druckarm (5) über zwei aneinander gelenkte Laschen (30,31), von denen eine an der Grundplatte (1) und die andere am Druckarm (5) angelenkt ist, mit der Grundplatte (1) verbunden ist und am Druckarm (5) sowie an der am Druckarm (5) angelenkten Lasche (31) Anschläge (43,44) angebracht sind, die zusammenwirkend den Schwenkwinkel der Lasche (31) gegenüber dem Druckarm (5) begrenzen, zum Beispiel auf 3°.

5. Handgerät nach Anspruch 1 oder 2, dadurch gekennzeichnet, daß die Schwenkachse (11) der Lochstempel (10) im wesentlichen horizontal verschiebbar mit dem Druckarm verbunden ist.

6. Handgerät nach einem der Ansprüche 1 bis 5, dadurch gekennzeichnet, daß im Druckarm (5) drehbar eine Druckwelle (27) gelagert ist, auf deren aus dem Druckarm (5) herausragende Wellenstummeln Stellringe (28) befestigt sind, die an den Seitenflächen des Druckarmes (5) anliegen und in den Stellringen (28) und den herausragenden Wellenstummeln der Druckwelle (27) radiale Bohrungen zum Einsetzen der Lochstempel (10) angeordnet sind und die Lochstempel (10) mit einem oberen Anschlagbund an der Druckwelle (27) anliegend von in die Bohrung der Stellringe (28) eingeschraubte Schraubenbolzen (29) in der Druckwelle (27) gehalten sind.

7. Handgerät nach einem der Ansprüche 1 bis 6, dadurch gekennzeichnet, daß zwischen den Matrizen (13) und den Führungsbolzen (12) ein auf das zu bearbeitende Bandmaterial (17) abgestimmter Führungsspalt (16) angeordnet ist, dessen Längsmittenachse die Längsachsen der Lochstempel (10) schneidet.

8. Handgerät nach Anspruch 7,
dadurch gekennzeichnet,
daß am Auslaß des Führungsspaltes (16) mit einer Seitenwand des Führungsspaltes (16) fluchtend eine Anschlagführung (21) angeordnet ist, auf der ein Anschlag (22) verschiebbar und feststellbar geführt ist.

9. Handgerät nach Anspruch 8,
dadurch gekennzeichnet,
daß auf der Anschlagführung (21) eine Längenmeßskala (23) angeordnet ist, deren O-Wert an der der Anschlagführung (21) zugewandten Seite des Trennmessers beginnt.

10. Handgerät nach Anspruch 9,
dadurch gekennzeichnet,
daß mit dem verschiebbaren Anschlag (22) ein mit der Längenmeßskala (23) zusammenwirkender Zeiger (25) verbunden ist, der relativ zum Anschlag (22) um einen Betrag (z.B. 2 cm) zum Trennmesser (6) hin versetzt ist, der dem doppelten Abstand der Längsachse eines Lochstempels (10) von der zugehörigen Schneidkante des Trennmessers (6) entspricht.

11. Handgerät nach einem der Ansprüche 1 bis 10,
dadurch gekennzeichnet,
daß zwischen dem Trennmesser (6) und dem ausschwenkbaren Ende des Druckarms (5) am Druckarm (5) ein Biegestempel (33) befestigt ist, der mit einer gegen die Grundplatte (1) sich abstützende Biegematrize (34) derart zusammenwirkt, daß ein in die Biegematrize (34) eingelegtes Bandstück (17) um 90 bis 100 ° abgewinkelt wird.

12. Handgerät nach Anspruch 11, dadurch gekennzeichnet, daß der Biegestempel (33) über ein Laschenpaar (37) am Druckarm (5) angelenkt ist.

13. Handgerät nach Anspruch 11 oder 12, dadurch gekennzeichnet, daß die Biegematrize (34) seitliche Führungsstege (38) für das zu bearbeitende Bandmaterial (17) aufweist.

14. Handgerät nach Anspruch 11 bis 13, dadurch gekennzeichnet, daß an der Biegematrize (34) ein entfernbarer Anschlag (39) für das abzuwinkelnde Material angeordnet ist.

15. Handgerät nach einem der Ansprüche 1 bis 14, dadurch gekennzeichnet, daß es auf einem mindestens dreibeinigen Ständer (50) befestigt ist, der in der Flucht der Bandführung, rechtwinklig zum Trennmesser (6) eine die zuverarbeitende Bandstahlrolle (51) aufnehmende Tasche (52) aufweist und daß eine aus mindestens drei Rollen (54, 55, 56) bestehende Richtvorrichtung (53) vorgesehen ist, von denen mindestens eine Rolle (55) einstellbar ist.

16. Handgerät nach Anspruch 15, dadurch gekennzeichnet, daß die Tasche (52) von zwei in einer senkrechten Ebene befindlichen Beinen (57, 58) des Ständers (50) und von / im Abstand parallel zu diesen Beinen (57, 58) verlaufenden Profilen (60, 61) sowie zwischen den Beinen (57, 58) und den Profilen (62, 63) drehbar gelagerten Rollen (62, 63) gebildet ist.

17. Handgerät nach Anspruch 15 oder 16, dadurch gekennzeichnet, daß unterhalb des Führungsspaltes (16) und, parallel zur Längenmaßskala (23) eine Auffangrinne (67) für das verarbeitete Material angeordnet ist.

FIG.1

0058423

-2/5-

FIG. 2

FIG. 3

0058423

FIG. 4

FIG. 4a

FIG. 4b

FIG. 4c

0058423

FIG. 5

FIG. 5a

FIG. 5b

FIG. 5c

FIG. 5d

FIG. 5e

0058423

FIG.6

FIG.7